Europäisches Patentamt

European Patent Office

Office européen des brevets

(11) Publication number: **0 460 779 A1**

## EUROPEAN PATENT APPLICATION

(21) Application number: **91250137.6**

(22) Date of filing: **28.05.91**

(51) Int. Cl.⁵: **C04B 14/20**

(30) Priority: **30.05.90 US 530713**

(43) Date of publication of application:
**11.12.91 Bulletin 91/50**

(84) Designated Contracting States:
**DE FR GB IT**

(71) Applicant: **W.R. Grace & Co.-Conn.**
**Grace Plaza, 1114 Ave. of the Americas**
**New York New York 10036(US)**

(72) Inventor: **Ou, Chia-Chih**
**12 Stimson Avenue**
**Lexington MA 02173(US)**
Inventor: **Neumayer, Deborah**
**800 Seward Street No. 3**
**Evanston IL 60202(US)**

(74) Representative: **UEXKÜLL & STOLBERG**
**Patentanwälte**
**Beselerstrasse 4**
**W-2000 Hamburg 52(DE)**

(54) **A method of rendering water resistant a vermiculite article.**

(57) A method of rendering water resistant a vermiculite article such as a film or coating comprised of delaminated vermiculite lamellae is comprising the step of contacting the article with a solution of a polyvalent inorganic metal cation having a concentration of less than 1M.

This invention relates to water stable vermiculite articles and the method of their manufacture. More particularly, the invention relates to water resistant vermiculite films, coatings and membranes.

Vermiculite articles such as films, coatings, membranes and the like may be prepared from vermiculite dispersions by a variety of methods. Vermiculite dispersions, and methods of their use as films, coatings, etc., are described for example In U.S. Patent Nos. 4,655,842 and 4,780,147. Such vermiculite articles tend to be unstable when exposed to water, and most will rapidly deteriorate and even disintegrate when in contact with water.

This characteristic of these vermiculite articles is disadvantageous, and may render the article unusable in applications where the film or coating will be exposed to moisture, e.g. automotive gaskets, roofing and flooring tiles, textiles and construction products. For these and similar applications it has been desired to provide vermiculite articles which are water resistant, i.e. which are able to withstand immersion In water or prolonged exposure to moisture without significant deterioration.

It is known that water resistance may be imparted to vermiculite films by treatment with polyvalent cations. U.S. Patent No. 3,325,340 for example discloses that the water resistance of vermiculite films may be improved by treating the films with strong electrolyte solutions (greater than 1M) containing polyvalent cations such as magnesium and aluminum. U.S. Patent No. 4,219,609 teaches that vermiculite articles may be stabilized by exposing the article to a concentrated vapor of ammonia or an alkylamine.

However, both of the above mentioned treatments suffer disadvantages. The former requires the use of strong solutions, which are costly and may cause waste disposal problems, while the latter employs irritating and potentially toxic vapors.

Thus it is an object of the present invention to provide an alternative method of imparting water resistance and/or water repellancy to vermiculite articles, without the above mentioned disadvantages.

Summary of the Invention

The present invention relates to a method of rendering water resistant or repellant a vermiculite article such as a film or coating comprised of delaminated vermiculite lamellae comprising the step of contancting the article with a solution of an inorganic polyvalent metal cation having a concentration of less than 1M. Vermiculite articles which may be rendered waterproof by the method of the invention include but are not limited to films, coatings, composites such as vermiculite-containing paper, and membranes.

The invention further relates to a water resistant article such as a film or coating comprised of delaminated vermiculite lamellae, which article is produced by contacting the article with a solution of an inorganic polyvalent metal cation having a concentration of less than 1M.

Detailed Description of the Invention

The term vermiculite as used herein refers to the group of rock forming mineral species characterized by a layer latticed structure In which the silicate layer units have a thickness of approximately 10 Angstroms. The main elements present in the layer are magnesium, aluminum, iron, silica and oxygen with the layers being separated by 1 or 2 sheets of water molecules associated with cations such as magnesium, calcium, and sodium. The layers have considerable lateral extent relative to the thickness of the basic 10 Angstroms unit layer. The term vermiculite as used herein therefore includes minerals consisting wholly or largely of vermiculite, or minerals of a mixed-layer type containing vermiculite layers as an important constituent, such as hydrobiotites, and chlorite-vermiculite, but does not include minerals of the montomorillonite group.

Vermiculite dispersions, i.e. aqueous suspensions of vermiculite lamellae, may be prepared by various methods, generally involving treating crystals of vermiculite with a cation which promotes swelling of the crystals in a direction normal to the main cleavage plane of the crystals during immersion In water, Immersing the treated crystals In water so that they swell, and shearing the swollen crystals in the water to form a dispersion of delaminated vermiculite lamellae. Thus, as used herein the term delaminated vermiculite refers to such lamellae prepared according to the above-mentioned process.

A coating of these vermiculite lamellae may be prepared by applying the dispersion to a substrate and removing the aqueous carrier, e.g. by evaporation. Self supporting films may be prepared by applying the dispersion to a substrate, removing the aqueous carrier, and then separating the coating from the substrate.

One method of preparing vermiculite dispersions, and films and coatings therefrom, is described in the above mentioned U.S. Patent Nos. 4,655,842 and 4,780,147, the disclosures of which are incorporated herein by reference. The method of the present invention may be advantageously employed to render such films and coatings water resistant or repellant. The present invention may also be used with vermiculite articles prepared from vermiculite dispersions made by other methods, such as that taught by U.S. Patent No. 3,325,340.

Coatings of vermiculite lamellae may be applied to a wide variety of substrates. The substrate may be in any suitable form such as an individual fiber, a sheet, a woven or non-woven mat or a block. The substrate may be a combustible material, e.g., a cellulosic fiber material or a naturally occurring or synthetic organic polymer, or a non-combustible material such as glass, fiberglass, or metal. If the substrate is porous to the dispersion, as with most fiberglass mats, for example, the coating may derive from impregnation of the substrate.

According to the invention, the coating or film of vermiculite lamellae may be rendered water resistant by contacting the film or coating with a solution of an inorganic polyvalent metal cation having a concentration of less than 1M. Preferred cations include $Mg^{++}$, and $Fe^{+++}$ as these cations are available inexpensively in a variety of forms, and are non-toxic under normal conditions of use. However, in certain applications other polyvalent cations may provide advantageous physical properties, and thus be preferred. Other polyvalent cations which may be used include but are not limited to $Ca^{++}$, $Pb^{++}$, $Sr^{++}$, $Cu^{++}$, $Ni^{++}$, $Cr^{+++}$, and $Al^{+++}$.

It is believed that these low concentration cationic solutions render the coating or film water resistant/repellant by exchanging the monovalent inorganic cation of the solution for the interlammelar cations initially associated with the vermiculite lamellae as a result of the preparative method. Typically, the vermiculite lamellae initially contain lithium or certain ammonium cations, and during treatment with a solution of the invention some or all of these cations are exchanged with the metal cation of said solution.

The vermiculite film or coating may be contacted with the solution in various ways. Preferably, the vermiculite article is immersed in the solution. The immersion time will vary depending upon the particular cation and the concentration of the solution. When a concentrated solution is used, less time is required to impart water resistance/repellancy, e.g. when a 0.5 Molar solution is used, the film generally requires about 10 minutes contact with the solution to develop adequate water resistance, whereas if a very weak solution (e.g. 0.01M) is used, up to 24 hours immersion may be required. For a given concentration, the immersion time may be shortened by heating the solution, preferably to about 40 to 95° C. The solution may also be sprayed onto the vermiculite article, particularly when the required contact time is short.

As suggested above, very low solution concentrations may advantageously be used in the invention. Preferred concentrations range from about 0.001M to about 0.9M, with 0.005 to 0.50 most preferred for optimal low cost and easy disposal, combined with good water resistance of the treated film. The cationic solution of the invention is preferably an aqueous solution, for safety and low cost. However, if desired, the cation may be provided in an organic solvent, or a blend of solvent and water.

After treatment with a cationic solution of the invention, the vermiculite article is preferably subsequently removed from the solution and rinsed with water. If desired, the vermiculite article may then be allowed to dry at room temperature, or heat-dried. Different articles will require different drying times and conditions. A vermiculite film may typically be dried at 60° C for approximately 30 minutes.

The water resistance of the thus-treated vermiculite article may be qualitatively determined by soaking the article in water for a predetermined period of time (18 hours in deionized water is used in the examples herein), and observing the degree of water resistance of the article according to the following grading system:

Grade A: structurally intact in the room temperature water, commonly has a dark green appearance with no apparent bubbling of the film, no slightly swollen areas, no light gold areas, the film can be removed from the water and handled without tearing

Grade B: structurally intact in room temperature water, may have bubbling, swollen areas, light gold areas, can be removed from the water with tweezers without tearing although may tear during handling with fingers

Grade C: structurally intact in room temperature water during slight agitation, may have bubbling, swollen areas, light gold areas, tears when removed from the water with tweezers

Grade D: partially dispersed in room temperature water, tears and disperses with slight agitation in the water

Grade F: totally dispersed in room temperature water after an overnight soak without any agitation or disperses within 10 minutes with slight agitation

Grade F⁻: tears and/or disperses in water with slight agitation

A quantitative measurement of the water resistance of a delaminated vermiculite article may also be obtained by soaking the article in water for a predetermined period of time and then testing the tensile strength of the article, with or without drying it first. Some erroneous results may be obtained using this test procedure, due to wrinkling and creasing of the vermiculite article during handling.

EP 0 460 779 A1

The following examples are illustrative of preferred embodiments of the invention and not of limiting effect. Other variations and modifications may be practiced by those skilled In the art without departing from the spirit and scope of the invention.

Example 1

A vermiculite dispersion was prepared, using No. 4 grade vermiculite ore from Enoree, South Carolina according to Example 2 of U.S. 4,655,842. The solids level of this dispersion was 7.5%.

A 30 mil vermiculite film was made from this dispersion, by wet drawing the film with a draw down gauge onto a granite surface. The film was allowed to dry overnight at ambient conditions, then removed from the granite and cut into 1"x5" strips. The length of the strips was parallel to the direction in which the film was drawn.

The strips were then placed in individual petri dishes and immersed in 100 ml of exchange solutions of $Mg^{++}$, having concentrations of 0.00005, 0.0005, 0.001, 0.0025, 0.005, 0.5 and 0.5 molar. After 18 hours the strips were removed from the solutions, rinsed 3 times with deionised water, and soaked in 100 ml of deionised water for 18 hours.

Another strip, the control, was immersed in deionised water, without prior immersion in a cationic solution of the invention.

The water resistance of the strips, according to the criteria described hereinabove, was as follows:

| Strip No. | Solution Concentration | Water Resistance |
|---|---|---|
| 1 | 0.00005 | Grade F⁻ |
| 2 | 0.0005 | Grade F⁻ |
| 3 | 0.001 | Grade C |
| 4 | 0.0025 | Grade B |
| 5 | 0.005 | Grade B |
| 6 | 0.05 | Grade A |
| 7 | 0.5 | Grade A |
| 8 (Control) | 0.0 | Grade F |

Example 2

Example 1 was repeated using, instead of the $Mg^{++}$ exchange solution $Fe^{+++}$ exchange solutions having concentrations of 0.000033, 0.00033, 0.00066, 0.0017, 0.0033, 0.033, and 0.33 molar. Results were as follows:

| Strip No. | Solution Concentration | Water Resistance |
|---|---|---|
| 1 | 0.000033 | Grade F⁻ |
| 2 | 0.00033 | Grade F⁻ |
| 3 | 0.00066 | Grade C |
| 4 | 0.0017 | Grade B |
| 5 | 0.0033 | Grade B |
| 6 | 0.033 | Grade A |
| 7 | 0.33 | Grade A |

**Claims**

1. A method of rendering water resistant a vermiculite article comprised of delaminated vermiculite lamellae comprising the step of contacting the article with a solution of an inorganic polyvalent metal

4

cation having a concentration of less than 1M.

2. A method according to claim 1 wherein the concentration of the metal cation in the solution is from about 0.001M to 0.9M, preferably 0.005M to 0.5M.

3. A method according to claim 1 or 2 wherein the inorganic cation is selected from $Mg^{++}$ and $Fe^{+++}$.

4. A method according to any of claims 1 to 3 wherein the solution is an aqueous solution.

5. A method according to any of claims 1 to 4 comprising the step of heating the solution to a temperature of from 40° to 95° C.

6. A method according to any of claims 1 to 5 wherein the article is immersed in the solution.

7. A method according to claim 6 wherein the article is immersed in the solution for at least 10 minutes.

8. A method according to claim 6 or 7 further comprising the subsequent sequential steps of removing the article from the solution and drying the article.

9. A method according to any of claims 1 to 5 wherein the solution is sprayed onto the article.

10. A method according to any of claims 1 to 9 wherein the vermiculite lamellae initially contain lithium cations and at least some of said lithium cations are exchanged with said polyvalent metal cation.

European
Patent Office

EUROPEAN SEARCH
REPORT

Application Number

EP 91 25 0137

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 155 175 (ARMSTRONG WORLD INDUSTRIES, INC.)<br>* abstract; claims 1-5; examples 4,6 * * page 5, line 15 - page 64, line 14 * * page 8, line 13 - page 10, line 3 *<br>— — — | 1-4,6-8, 10 | C 04 B 14/20 |
| X | US-A-4 045 241 (N. DAIMON ET AL)<br>* column 2, line 48 - column 3, line 11 * * column 5, line 55 - line 69 * * column 7, line 24 - line 55 *<br>— — — | 1-6,10 | |
| X | US-A-4 497 869 (O. KAMIGAITO ET AL)<br>* abstract; claims 1-3,5,10-11,18-22 * * column 1, line 66 - column 2, line 26 * * column 3, line 6 - line 65 * * column 5, line 13 - line 32 * * column 6, line 3 - line 18 * * column 7, line 12 - line 51 * * examples 1,3-4 *<br>— — — | 1-4,6-10 | |
| A | EP-A-0 016 659 (CORNING GLASS WORKS)<br>* abstract; claims 1,24-26,30 * * page 9, line 13 - page 10, line 33 * * page 16, line 13 - page 17, line 13 * * page 18, line 29 - page 21, line 4 * * page 29, line 29 - page 31, line 34 * * page 40, line 33 - page 41, line 28 * * page 56, line 18 - page 57, line 31 EP 91250137030* * page 89, line 1 - line 26 * * page 92, line 21 - line 34 *<br>— — — | 1,3-4, 6-10 | |
| A | US-A-4 441 905 (J. W. MALMENDIER ET AL)<br>* abstract; claims 1,3-15 * * column 7, line 56 - column 8, line 16 * * column 9, line 55 - column 10, line 19 *<br>— — — | 1-2,4,6-8, 10 | TECHNICAL FIELDS SEARCHED (Int. Cl.5)<br><br>C 04 B |
| D,A | US-A-3 325 340 (G. B. WALKER)<br>* column 1, line 35 - column 2, line 47 * * column 3, line 29 - column 4, line 9; claims 1,7; examples 4,6 *<br>— — — — — | 1,3-4,6-8, 10 | |

The present search report has been drawn up for all claims

| Place of search | Date of completion of search | Examiner |
|---|---|---|
| The Hague | 16 August 91 | NORGREN-OLSSON |